# EUROPEAN PATENT APPLICATION

(11) **EP 4 679 162 A1**
(43) Date of publication of application: **14.01.2026**
(21) Application number: 25182639.2
(22) Date of filing: 13.06.2025
(51) Int. Cl.: G02B 27/00, G02B 27/01

(54) **HEAD-UP DISPLAY SYSTEM**

(30) Priority: 08.07.2024 US 202463668311 P; 23.09.2024 CN 202411321635
(71) Applicant: Coretronic Corporation, Hsin-Chu 300 (TW)
(72) Inventor: PENG, Kuei-En, 300 Hsin-Chu (TW); CHUNG, Meng-Feng, 300 Hsin-Chu (TW); LEE, Po-Che, 300 Hsin-Chu (TW)
(74) Representative: Ter Meer Steinmeister & Partner

(57) **Abstract**

A head-up display system is adapted to transmit an image beam to a transmissive-reflective element and includes a picture generating module. The picture generating module includes a picture generating unit, at least one curved mirror, and a diffuser. The picture generating unit is configured to generate the image beam. The diffuser has a light incident surface. The curved mirror is disposed in a transmission path of the image beam between the picture generating unit and the diffuser to control at least one of a light angle and an angle distribution of the image beam incident on the diffuser, so that the image beam is incident on the light incident surface in a first direction, and is transmitted to the transmissive-reflective element after being uniformed by the diffuser. A normal direction of the light incident surface has a first included angle relative to the first direction.

## Description

This application claims the priority benefit of U.S. Provisional Application No. 63/668,311, filed on July 8, 2024 and China Application No. 202411321635.1, filed on September 23, 2024.

### Technical Field

The disclosure relates to a display system, and in particular to a head-up display system.

### Related Art

The optical system of a head-up display (for example, an augmented reality head-up display (ARHUD)) is an off-axis structure divided into two optical systems. One is a head-up display optical system, which includes two freeform curved mirrors and a windshield, and the other one is a picture source optical system (such as a picture generating unit, PGU), which may be in the form of another optical system such as a projector and a planar display. The working principle of the head-up display is that light from the picture source optical system is reflected onto the windshield via two freeform curved surfaces, and is then reflected into the human eyes via the windshield, forming a virtual image outside the windshield. Therefore, the human eyes can eventually observe the enlarged virtual image in front of a vehicle.

In the head-up display optical system, external sunlight may form stray light in the human eyes due to the incident angle and the placement angle of the picture source in space, and possible paths are as follows:
Situation 1: After sunlight directly irradiates the picture source optical system from the outside, sunlight is reflected to the freeform curved mirrors by the picture source optical system, and then is sequentially reflected by the two freeform curved mirrors and the windshield before being transmitted to the human eyes to form the stray light.
Situation 2: Sunlight directly irradiates one of the two freeform curved mirrors from the outside, then is sequentially reflected by the two freeform curved surfaces back to the picture source optical system along a designed light path. After that, the sunlight is reflected by the picture source optical system, then is sequentially reflected by the two freeform curved mirrors and the windshield along the original designed light path, and enter the human eyes to form the stray light.

The information disclosed in this Background section is only for enhancement of understanding of the background of the described technology and therefore it may contain information that does not form the prior art that is already known to a person of ordinary skill in the art. Further, the information disclosed in the Background section does not mean that one or more problems to be resolved by one or more embodiments of the disclosure was acknowledged by a person of ordinary skill in the art.

### SUMMARY

Thus it is an object to provide a head-up display system avoiding or reducing stray light caused by external sunlight from degrading the display of the image content.

The object is solved by the features of the independent claims. Preferred embodiments are given in the dependent claims.

An embodiment of the disclosure provides a head-up display system, which is adapted to transmit an image beam to a transmissive-reflective element.

The head-up display system includes a picture generating module. The picture generating module includes a picture generating unit, at least one curved mirror, and a diffuser. The picture generating unit is configured to generate the image beam, and the diffuser has a light incident surface. The at least one curved mirror is disposed in a transmission path of the image beam between the picture generating unit and the diffuser, and is configured to control at least one of a light angle and an angle distribution of the image beam incident on the diffuser, so that the image beam is incident on the light incident surface of the diffuser in a first direction, and is transmitted to the transmissive-reflective element after being uniformed by the diffuser. A normal direction of the light incident surface of the diffuser has a first included angle that is not 0 relative to the first direction. The at least one curved mirror is configured to image the image beam on the light incident surface of the diffuser.

In one or more embodiments, the at least one curved mirror may be a spherical mirror, an aspherical mirror, a freeform mirror or a combination thereof.

In one or more embodiments, the first included angle may fall within a range of 10 degrees to 30 degrees.

In one or more embodiments, the image beam may emit from the picture generating unit in a second direction, the second direction is parallel to a first reference plane, the light incident surface of the diffuser has a second included angle relative to the first reference plane, and the first included angle is equal to the second included angle.

In one or more embodiments, the second direction may be perpendicular to the first direction.

In one or more embodiments, the first direction and the second direction may form a second reference plane.

In one or more embodiments, the normal direction of the light incident surface of the diffuser may be parallel to the second reference plane.

In one or more embodiments, the first direction and the second direction may form a second reference plane.

In one or more embodiments, the normal direction of the light incident surface of the diffuser may have an included angle that is not 0 with the second reference plane.

In one or more embodiments, the image beam transmitted to the transmissive-reflective element may be reflected by the transmissive-reflective element and emitted in a third direction.

In one or more embodiments, the third direction may have a third included angle relative to a horizontal plane.

In one or more embodiments, the third included angle may be in a range of 2 degrees to 5 degrees.

In one or more embodiments, the picture generating unit may comprise a digital micro-mirror device, a liquid-crystal-on-silicon panel, a thin film transistor liquid crystal display, a laser beam scanning micro-electro-mechanical system, an organic light emitting diode display panel, a micro light emitting diode display panel, or a transmissive liquid crystal panel.

In one or more embodiments, the head-up display system may comprise an optical module.

In one or more embodiments, the image beam may be transmitted to the optical module after being uniformed by the diffuser.

In one or more embodiments, the optical module may comprise at least one reflecting element, and the image beam may be reflected by the at least one reflecting element and may be transmitted to the transmissive-reflective element.

In one or more embodiments, the at least one reflecting element may be a spherical mirror, an aspherical mirror, a freeform curved mirror, or a combination thereof.

In one or more embodiments, a connecting line between a geometric center of the diffuser and any end of the at least one reflecting element in an aperture direction may have a fourth included angle relative to the first direction.

In one or more embodiments, the first included angle may be greater than half of the fourth included angle.

In one or more embodiments, the at least one curved mirror may be configured to reduce a field angle of the image beam from the picture generating unit.

In one or more embodiments, the at least one curved mirror may be configured to enable light rays of the image beam in different fields of view to be obliquely incident on the diffuser in a form of being parallel to each other.

In one or more embodiments, the picture generating module may further comprise a projection lens disposed in a transmission path of the image beam between the picture generating unit and the at least one curved mirror.

In one or more embodiments, the projection lens and the at least one curved mirror may be configured to transmit the image beam from the picture generating unit, so that the image beam is imaged on the diffuser.

In one or more embodiments, the picture generating module may comprise a planar mirror disposed in a transmission path of the image beam between the picture generating unit and the at least one curved mirror.

In one or more embodiments, the diffuser may be a diffusion plate.

Other objectives, features and advantages of the invention will be further understood from the further technological features disclosed by the embodiments of the invention wherein there are shown and described preferred embodiments of this invention, simply by way of illustration of modes best suited to carry out the invention.

### BRIEF DESCRIPTION OF THE DRAWINGS

FIG. 1A is a schematic diagram of a head-up display system of an embodiment of the disclosure.
FIG. 1B is a schematic diagram of a picture generating module in FIG. 1A.
FIG. 1C is a schematic diagram of a picture generating module and at least one reflecting element in FIG. 1A.
FIG. 2 is a ray tracing diagram of a picture generating module of an embodiment of the disclosure.
FIG. 3 is a three-dimensional ray tracing diagram of a picture generating module of another embodiment of the disclosure.
FIG. 4 is a schematic diagram of a head-up display system of still another embodiment of the disclosure.
FIG. 5 is a schematic diagram of a head-up display system of yet another embodiment of the disclosure.
FIG. 6 is a schematic diagram of a head-up display system of another embodiment of the disclosure.
FIG. 7 is a three-dimensional ray tracing diagram of a picture generating module according to still another embodiment of the disclosure.

### DESCRIPTION OF THE EMBODIMENTS

In the following detailed description of the preferred embodiments, reference is made to the accompanying drawings which form a part hereof, and in which are shown by way of illustration specific embodiments in which the invention may be practiced. In this regard, directional terminology, such as "top", "bottom", "front", "back", etc., is used with reference to the orientation of the Figure(s) being described. The components of the invention can be positioned in a number of different orientations. As such, the directional terminology is used for purposes of illustration and is in no way limiting. On the other hand, the drawings are only schematic and the sizes of components may be exaggerated for clarity. It is to be understood that other embodiments may be utilized and structural changes may be made without departing from the scope of the invention. Also, it is to be understood that the phraseology and terminology used herein are for the purpose of description and should not be regarded as limiting. The use of "including", "comprising", or "having" and variations thereof herein is meant to encompass the items listed thereafter and equivalents thereof as well as additional items. Unless limited otherwise, the terms "connected", "coupled", and "mounted" and variations thereof herein are used broadly and encompass direct and indirect connections, couplings, and mountings. Similarly, the terms "facing", "faces" and variations thereof herein are used broadly and encompass direct and indirect facing, and "adjacent to" and variations thereof herein are used broadly and encompass directly and indirectly "adjacent to". Therefore, the description of "A" component facing "B" component herein may contain the situations that "A" component directly faces "B" component or one or more additional components are between "A" component and "B" component. Also, the description of "A" component "adjacent to" "B" component herein may contain the situations that "A" component is directly "adjacent to" "B" component or one or more additional components are between "A" component and "B" component. Accordingly, the drawings and descriptions will be regarded as illustrative in nature and not as restrictive.

The disclosure provides a head-up display system, which can effectively reduce stray light caused by external sunlight, while having high light utilization and clear display.

Other objectives and advantages of the disclosure may be further understood from the technical features of the disclosure.

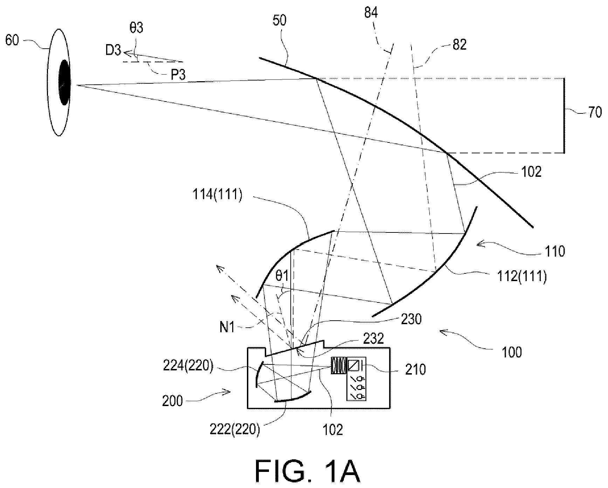

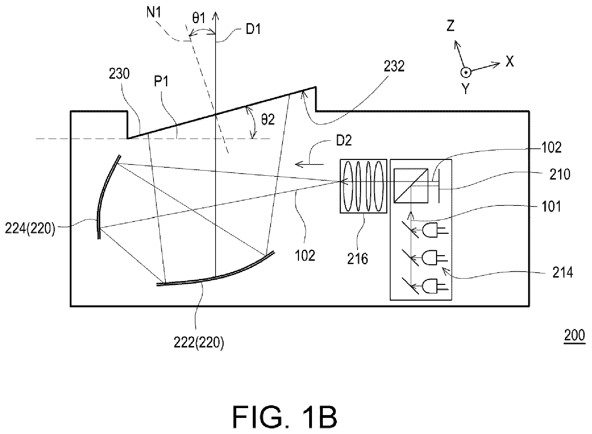

FIG. 1A is a schematic diagram of a head-up display system according to an embodiment of the disclosure, and FIG. 1B is a schematic diagram of a picture generating module in FIG. 1A. Please refer to FIG. 1A and FIG. 1B. A head-up display system 100 of the embodiment is adapted to transmit an image beam 102 to a transmissive-reflective element 50. In the embodiment, the transmissive-reflective element 50 is a windshield of a transportation, such as a front windshield of a car. The head-up display system 100 includes a picture generating module 200 and an optical module 110. The picture generating module 200 includes a picture generating unit (PGU) 210 and at least one curved mirror 220 (two curved mirrors such as a curved mirror 222 and a curved mirror 224 are used as an example in FIG. 1A and FIG. 1B), and a diffuser 230. The picture generating unit 210 is configured to generate the image beam 102. In the embodiment, the picture generating unit 210 includes a digital micro-mirror device (DMD). Specifically, the picture generating unit 210 may be matched with an illumination system 214 and a projection lens 216. The illumination system 214 provides an illumination beam 101 to the picture generating unit 210, and the picture generating unit 210 converts the illumination beam 101 into the image beam 102. The projection lens 216 is disposed in a transmission path of the image beam 102 and is configured to project the image beam 102 to the curved mirror 220 (such as being projected to the curved mirror 224 in the embodiment). In other embodiments, the picture generating unit 210 may also be a liquid-crystal-on-silicon (LCOS) panel, a thin film transistor liquid crystal display (TFT-LCD), a laser beam scanning (LBS) micro-electro-mechanical system (MEMS), an organic light emitting diode display panel, a micro light emitting diode display panel, or a transmissive liquid crystal panel.

The diffuser 230 has a light incident surface 232. The at least one curved mirror 220 is disposed in a transmission path of the image beam 102 between the picture generating unit 210 and the diffuser 230, and is configured to control at least one of a light angle and an angle distribution of the image beam 102 incident on the diffuser 230, so that the image beam 102 is incident on the light incident surface 232 of the diffuser 230 in a first direction D1, and is transmitted to the optical module 110 after being uniformed by the diffuser 230. The optical module 110 includes at least one reflecting element 111 (two reflecting elements such as a reflecting element 112 and a reflecting element 114 are taken as an example in FIG. 1A). The image beam 102 is reflected by the at least one reflecting element 111 and then is transmitted to the transmissive-reflective element 50. The reflecting element 111 may be a mirror or a reflective prism. A normal direction N1 of the light incident surface 232 of the diffuser 230 has a first included angle θ1 that is not 0 relative to the first direction D1. The at least one curved mirror 220 is configured to image the image beam 102 on the light incident surface 232 of the diffuser 230. That is, a focal plane of the at least one curved mirror 220 is located on the light incident surface 232 of the diffuser 230.

In the embodiment, the at least one curved mirror 220 focuses the image beam 102 on the light incident surface 232 of the diffuser 230 to form an intermediate image on the light incident surface 232. After the image beam 102 transmitted from the intermediate image is reflected to the transmissive-reflective element 50 by the reflecting element 111, the transmissive-reflective element 50 reflects the image beam 102 to an eye 60 of a user, and the image beam 102 is imaged in the retina of the eye 60, and the user feels as if there is a virtual image 70 on the other side of the transmissive-reflective element 50 relative to the eye 60, and the virtual image 70 corresponds to the intermediate image on the light incident surface 232. In the embodiment, the image beam 102 from the picture generating unit 210 is sequentially reflected by the curved mirror 224 and the curved mirror 222, and is transmitted to the diffuser 230, and the image beam 102 from the diffuser 230 is sequentially reflected by the reflecting element 114 and the reflecting element 112, and is then transmitted to the transmissive-reflective element 50.

In the head-up display system 100 of the embodiment, the at least one curved mirror 220 is adopted, so that the image beam 102 is incident on the light incident surface 232 of the diffuser 230 in the first direction D1, and the normal direction N1 of the light incident surface 232 of the diffuser 230 has the first included angle θ1 that is not 0 relative to the first direction D1. Therefore, when an external large-angle sunlight 82 or 84 irradiates the diffuser 230, the sunlight 82 or 84 does not enter the picture generating module 200, but is reflected by the diffuser 230 and leaves the picture generating module 200. Therefore, the sunlight 82 or 84 neither enters the path of the image beam 102 nor incidents on the eye 60 of the user via the reflecting element 111 and the transmissive-reflective element 50, which can effectively reduce stray light caused by the external sunlight 82 or 84. The sunlight 82 passes through the transmissive-reflective element 50 and directly irradiates the reflecting element 112, and then is reflected to the reflecting element 114 by the reflecting element 112 and transmitted to the diffuser 230. The sunlight 84 passes through the transmissive-reflective element 50 and then directly irradiates the diffuser 230.

In addition, since the normal direction N1 of the light incident surface 232 of the diffuser 230 has the first included angle θ1 that is not 0 relative to the first direction D1, the image beam 102 may still be sufficiently transmitted to the reflecting element 111 and the transmissive-reflective element 50, so that the head-up display system 100 has high light utilization, reducing overall power consumption, and the image beam 102 provided by the head-up display system 100 can have high brightness. In other words, in an embodiment, the diffuser 230 is inclined relative to a horizontal plane, but the image beam 102 is still forward-transmitted upward to the reflecting element 114, instead of being deflected at an angle in advance the same as the diffuser 230, so the image beam 102 may be sufficiently transmitted to the reflecting element 114, so that the head-up display system 100 has high light utilization, and an image thereof can have good brightness uniformity. In the embodiment, the first included angle θ1 falls in a range of 10 degrees to 30 degrees, so the diffuser 230 has a sufficiently inclined angle, so that the external sunlight has a large incident angle when incident on the diffuser 230, and may be sufficiently deflected after being reflected without being reflected back to the reflecting element 111.

Furthermore, in the head-up display system 100 of the embodiment, since the at least one curved mirror 220 is adopted to image the image beam 102 on the light incident surface 232 of the diffuser 230, although the normal direction N1 of the light incident surface 232 of the diffuser 230 has the first included angle θ1 that is not 0 relative to the first direction D1, imaging on the diffuser 230 is still clear, so the head-up display system 100 of the embodiment can achieve clear display.

In the embodiment, the at least one curved mirror 220 is a spherical mirror, an aspherical mirror, a freeform curved mirror, or a combination of the above. In the embodiment, the at least one reflecting element 111 is a spherical mirror, an aspherical mirror, a freeform curved mirror, or a combination of the above.

In the embodiment, the image beam 102 emits from the picture generating unit 210 in a second direction D2, and the second direction D2 is parallel to a first reference plane P1. The light incident surface 232 of the diffuser 230 has a second included angle θ2 relative to the first reference plane P1, and the first included angle θ1 and the second included angle θ2 are substantially equal. In the embodiment, the second direction D2 is perpendicular to the first direction D1. In other words, the diffuser 230 is inclined relative to the first reference plane P1, so stray light caused by external sunlight can be effectively reduced. On the other hand, the image beam 102 is forward-incident on the first reference plane P1, so the image beam 102 may be sufficiently transmitted to the reflecting element 114 to ensure high light utilization. In an embodiment, the first reference plane P1 is, for example, parallel to the horizontal plane.

In the embodiment, the first direction D1 and the second direction D2 form a second reference plane (that is, the figure plane of FIG. 1B, that is, an XZ plane). The normal direction N1 of the light incident surface 232 of the diffuser 230 is parallel to the second reference plane, and the light incident surface 232 is perpendicular to the second reference plane. In the embodiment, Cartesian coordinates X-Y-Z are defined by the light incident surface 232 of the diffuser 230 and the normal direction N1, wherein an X direction is parallel to the light incident surface 232, a Y direction is parallel to the light incident surface 232 and perpendicular to the X direction, a Z direction is perpendicular to the X direction and the Y direction, the Z direction is parallel to the normal direction N1, and the XZ plane is a plane formed by the X direction and the Z direction.

In the embodiment, the picture generating module 200 further includes the projection lens 216 disposed in a transmission path of the image beam 102 between the picture generating unit 210 and the at least one curved mirror 220. The projection lens 216 and the at least one curved mirror 220 are configured to transmit the image beam 102 from the picture generating unit 210, so that the image beam 102 is imaged on the diffuser 230. In the embodiment, the diffuser 230 is, for example, a diffusion plate.

In the embodiment, the image beam 102 transmitted to the transmissive-reflective element 50 is reflected by the transmissive-reflective element 50, and is emitted in a third direction D3 and transmitted to the eye 60. The third direction D3 has a third included angle θ3 relative to a horizontal plane P3. The included angle θ3 is in a range of 2 degrees to 5 degrees. In other embodiments, the third direction D3 may be parallel to the horizontal plane P3.

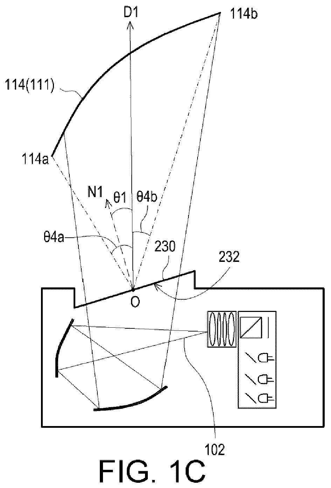

Please further refer to FIG. 1C. FIG. 1C is a schematic diagram of a picture generating module and at least one reflecting element in FIG. 1A. In the embodiment, when the image beam 102 enters the diffuser 230, an optical axis of the image beam 102 passes through a geometric center O of the diffuser 230. A connecting line between the geometric center O and any end (an end 114a or 114b is taken as an example in FIG. 1C) of the at least one reflecting element 111 (the reflecting element 114 closest to the diffuser 230 in the transmission path of the image beam 102 emitted by the diffuser 230 is taken as an example in FIG. 1C) in an aperture direction has a fourth included angle (θ4a or θ4b is taken as an example in FIG. 1C) relative to the first direction D1, wherein the first included angle θ1 is greater than half of the fourth included angle θ4a or θ4b (that is, the first included angle θ1 > 1/2 of the fourth included angle θ4a or the first included angle θ1 > 1/2 of the fourth included angle θ4b). Accordingly, an aperture length of the at least one reflecting element 111 matched with an inclination angle of the diffuser 230 may further reduce the chance of external sunlight entering the picture generating module 200 or entering the transmission path of the image beam 102, thereby reducing stray light, while preventing the picture generating module 200 from high temperature damage caused by sunlight entering.

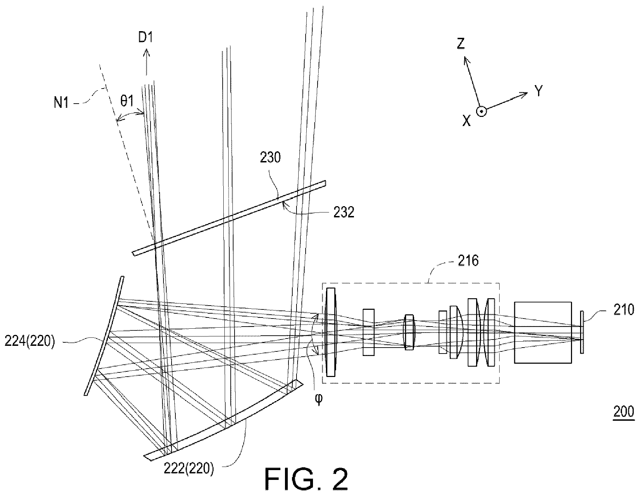

FIG. 2 is a ray tracing diagram of a picture generating module according to an embodiment of the disclosure. Please refer to FIG. 1A, FIG. 1B, and FIG. 2. In the embodiment, the at least one curved mirror 220 is configured to reduce a field angle φ of the image beam 102 from the picture generating unit 210, wherein the field angle φ is, for example, a field of view (FOV). In the embodiment, the at least one curved mirror 220 is configured to enable light rays of the image beam 102 in different fields of view to be obliquely incident on the diffuser 230 in a form of being parallel to each other, as shown in FIG. 2. In other words, via the effect of the curved mirror 220, the image beam 102 is changed from a state of having the field angle φ to an approximately parallel light and be obliquely incident on the diffuser 230, as shown in FIG. 2. Therefore, the curved mirror 220 reduces the field angle φ of the image beam 102 from the picture generating unit 210.

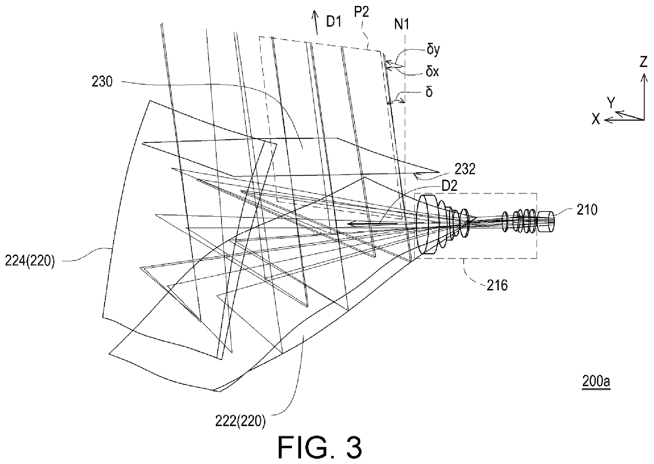

FIG. 3 is a three-dimensional ray tracing diagram of a picture generating module according to another embodiment of the disclosure. Please refer to FIG. 3. A picture generating module 200a of the embodiment is similar to the picture generating module 200 of FIG. 2, and the main difference between the two is as follows. In the picture generating module 200a of the embodiment, the first direction D1 and the second direction D2 form a second reference plane P2, and the normal direction N1 of the light incident surface 232 of the diffuser 230 has an included angle δ that is not 0 with the second reference plane P2. In the embodiment, the Cartesian coordinates X-Y-Z are defined by the light incident surface 232 of the diffuser 230 and the normal direction N1, wherein the X direction is parallel to the light incident surface 232 of the diffuser 230, the Y direction is parallel to the light incident surface 232, the Z direction is parallel to the normal direction N1, and the X direction, the Y direction, and the Z direction are perpendicular to each other. The included angle δ may be divided into a component δx in the X direction and a component δy in the Y direction. In an embodiment, the component δx is, for example, 13 degrees, and the component δy is, for example, 8 degrees, but the disclosure is not limited thereto.

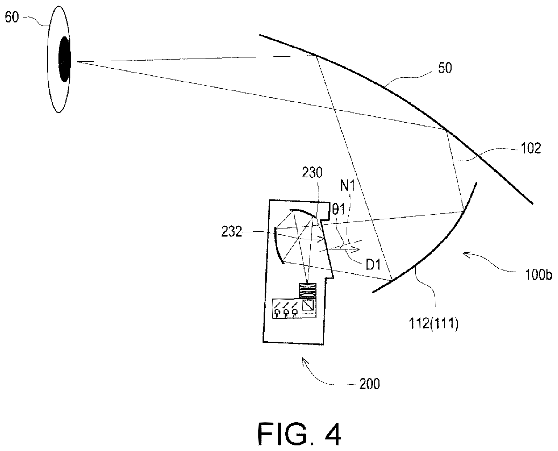

FIG. 4 is a schematic diagram of a head-up display system according to still another embodiment of the disclosure. Please refer to FIG. 4. A head-up display system 100b of the embodiment is similar to the head-up display system 100 of FIG. 1A. The difference between the two is that the head-up display system 100b of the embodiment only includes the reflecting element 112, but does not include the reflecting element 114 in FIG. 1A, and the reflecting element 112 reflects the image beam 102 from the diffuser 230 to the transmissive-reflective element 50. In addition, in the embodiment, the image beam 102 is incident on the light incident surface 232 of the diffuser 230 in the first direction D1, and the first direction D1 is approximately similar to a horizontal plane direction. In other words, the configuration of specific relative positions of the picture generating module 200 and the reflecting element 111 in space may be adjusted according to light path requirements of the head-up display system.

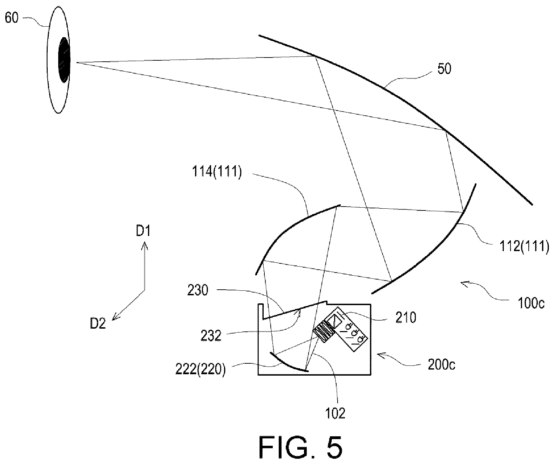

FIG. 5 is a schematic diagram of a head-up display system according to yet another embodiment of the disclosure. Please refer to FIG. 5. A head-up display system 100c of the embodiment is similar to the head-up display system 100 of FIG. 1A. The difference between the two is that a picture generating module 200c of the head-up display system 100c of the embodiment includes the curved mirror 222, but does not include the curved mirror 224 in FIG. 1A, and the image beam 102 from the picture generating unit 210 is reflected to the diffuser 230 by the curved mirror 222. In addition, in the embodiment, the first direction D1 and the second direction D2 are not perpendicular. In other words, the configuration of specific relative positions of the picture generating unit 210 and the curved mirror 220 in the space of the picture generating module 200 may be adjusted according to light path requirements of the picture generating module 200.

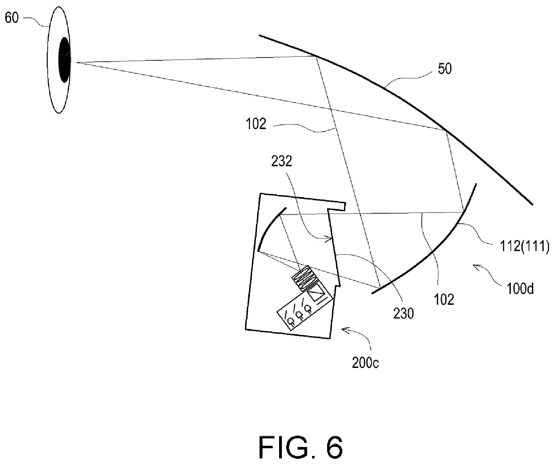

FIG. 6 is a schematic diagram of a head-up display system according to another embodiment of the disclosure. Please refer to FIG. 6. A head-up display system 100d of the embodiment is similar to the head-up display system 100c of FIG. 5. The difference between the two is that the head-up display system 100d of the embodiment only includes the reflecting element 112, but does not include the reflecting element 114 in FIG. 5, and the reflecting element 112 reflects the image beam 102 from the diffuser 230 to the transmissive-reflective element 50.

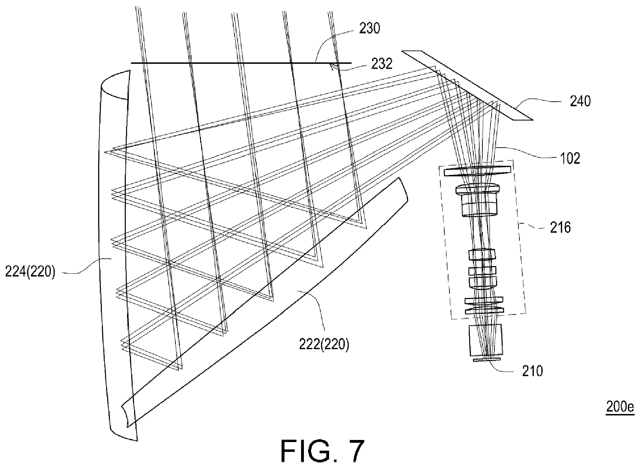

FIG. 7 is a three-dimensional ray tracing diagram of a picture generating module according to still another embodiment of the disclosure. Please refer to FIG. 7. A picture generating module 200e of the embodiment is similar to the picture generating module 200 of FIG. 2, and the main difference between the two is as follows. The picture generating module 200e of the embodiment further includes a planar mirror 240 disposed in the transmission path of the image beam 102 between the picture generating unit 210 and the at least one curved mirror 220. In other words, the planar mirror 240 reflects the image beam 102 from the picture generating unit 210 to the curved mirror 220 to turn the light path.

In summary, the head-up display system according to the embodiments of the disclosure has at least one of the following advantages. In the head-up display system according to the embodiments of the disclosure, the at least one curved mirror is adopted, so that the image beam is incident on the light incident surface of the diffuser in the first direction, and the normal direction of the light incident surface of the diffuser has the first included angle that is not 0 relative to the first direction. Therefore, when the external large-angle sunlight irradiates the diffuser, the sunlight does not enter the picture generating module, but is reflected by the diffuser and leaves. At the same time, the sunlight neither enters the path of the image beam, nor enters the human eye via the reflecting element and the transmissive-reflective element, which can effectively reduce stray light caused by external sunlight. In addition, since the normal direction of the light incident surface of the diffuser has the first included angle that is not 0 relative to the first direction, the image beam may still be sufficiently transmitted to the reflecting element and the transmissive-reflective element, so that the head-up display system has high light utilization. Furthermore, in the head-up display system according to the embodiments of the disclosure, since the at least one curved mirror is adopted to image the image beam on the light incident surface of the diffuser, although the normal direction of the light incident surface of the diffuser has the first included angle that is not 0 relative to the first direction, and the imaging on the diffuser is still clear, so the head-up display system according to the embodiments of the disclosure can achieve clear display.

The foregoing description of the preferred embodiments of the invention has been presented for purposes of illustration and description. It is not intended to be exhaustive or to limit the invention to the precise form or to exemplary embodiments disclosed. Accordingly, the foregoing description should be regarded as illustrative rather than restrictive. Obviously, many modifications and variations will be apparent to practitioners skilled in this art. The embodiments are chosen and described in order to best explain the principles of the invention and its best mode practical application, thereby to enable persons skilled in the art to understand the invention for various embodiments and with various modifications as are suited to the particular use or implementation contemplated. Therefore, the term "the invention", "the present invention" or the like does not necessarily limit the claim scope to a specific embodiment, and the reference to particularly preferred exemplary embodiments of the invention does not imply a limitation on the invention, and no such limitation is to be inferred. The invention is limited only by the scope of the appended claims. Moreover, these claims may refer to use "first", "second", etc. following with noun or element. Such terms should be understood as a nomenclature and should not be construed as giving the limitation on the number of the elements modified by such nomenclature unless specific number has been given. The abstract of the disclosure is provided to comply with the rules requiring an abstract, which will allow a searcher to quickly ascertain the subject matter of the technical disclosure of any patent issued from this disclosure. It is submitted with the understanding that it will not be used to interpret or limit the scope or meaning of the claims. Any advantages and benefits described may not apply to all embodiments of the invention. It should be appreciated that variations may be made in the embodiments described by persons skilled in the art without departing from the scope of the invention as defined by the following claims. Moreover, no element and component in the disclosure is intended to be dedicated to the public regardless of whether the element or component is explicitly recited in the following claims.

## Claims

1. A head-up display system (100), adapted to transmit an image beam (102) to a transmissive-reflective element (50), the head-up display system (100) comprising a picture generating module (200), wherein:
the picture generating module (200) comprises a picture generating unit (210), at least one curved mirror (220), and a diffuser (230),
the picture generating unit (210) is configured to generate the image beam (102),
the diffuser (220) has a light incident surface (232), the at least one curved mirror (220) is disposed in a transmission path of the image beam (102) between the picture generating unit (210) and the diffuser (230), and is configured to control at least one of a light angle and an angle distribution of the image beam (102) incident on the diffuser (230), so that the image beam (102) is incident on the light incident surface (232) of the diffuser (230) in a first direction (D1), and is transmitted to the transmissive-reflective element (50) after being uniformed by the diffuser (230),
wherein a normal direction (N1) of the light incident surface (232) of the diffuser (230) has a first included angle (θ1) that is not 0 relative to the first direction (D1), and the at least one curved mirror (220) is configured to image the image beam (102) on the light incident surface (232) of the diffuser (230).

2. The head-up display system according to claim 1, wherein the at least one curved mirror (220) is a spherical mirror, an aspherical mirror, a freeform mirror or a combination thereof.

3. The head-up display system according to claim 1 or 2, wherein the first included angle (θ1) falls within a range of 10 degrees to 30 degrees.

4. The head-up display system according to any one of the preceding claims, wherein the image beam (102) emits from the picture generating unit (210) in a second direction (D2), the second direction (D2) is parallel to a first reference plane (P1), the light incident surface (232) of the diffuser (230) has a second included angle (θ2) relative to the first reference plane (P1), and the first included angle (θ1) is equal to the second included angle (θ2), preferably the second direction (D2) is perpendicular to the first direction (D1).

5. The head-up display system according to claim 4, wherein the first direction (D1) and the second direction (D2) form a second reference plane (P2), and the normal direction (N1) of the light incident surface (232) of the diffuser (230) is parallel to the second reference plane (P2) or the normal direction (N1) of the light incident surface (232) of the diffuser (230) has an included angle that is not 0 with the second reference plane (P2).

6. The head-up display system according to any one of the preceding claims, wherein the image beam (102) transmitted to the transmissive-reflective element (50) is reflected by the transmissive-reflective element (50) and emitted in a third direction (D3), the third direction (D3) has a third included angle (θ3) relative to a horizontal plane (P3), and the third included angle (θ3) is in a range of 2 degrees to 5 degrees.

7. The head-up display system according to any one of the preceding claims, wherein the picture generating unit (210) comprises a digital micro-mirror device (DMD), a liquid-crystal-on-silicon (LCOS) panel, a thin film transistor liquid crystal display (TFT-LCD), a laser beam scanning micro-electro-mechanical system (MEMS), an organic light emitting diode display panel, a micro light emitting diode display panel, or a transmissive liquid crystal panel.

8. The head-up display system according to any one of the preceding claims, further comprising an optical module (110), the image beam (102) is transmitted to the optical module (110) after being uniformed by the diffuser (230), preferably the optical module (110) comprises at least one reflecting element (111), and the image beam (102) is reflected by the at least one reflecting element (111) and is transmitted to the transmissive-reflective element (50).

9. The head-up display system according to claim 8, wherein the at least one reflecting element (111) is a spherical mirror, an aspherical mirror, a freeform curved mirror, or a combination thereof.

10. The head-up display system according to claim 8 or 9, wherein a connecting line between a geometric center (O) of the diffuser (230) and any end of the at least one reflecting element (111) in an aperture direction has a fourth included angle (θ4a, θ4b) relative to the first direction (D1), wherein the first included angle (θ1) is greater than half of the fourth included angle (θ4a, θ4b).

11. The head-up display system according to any one of the preceding claims, wherein the at least one curved mirror (220) is configured to reduce a field angle (φ) of the image beam (102) from the picture generating unit (210).

12. The head-up display system according to claim 11, wherein the at least one curved mirror (220) is configured to enable light rays of the image beam (102) in different fields of view to be obliquely incident on the diffuser (230) in a form of being parallel to each other.

13. The head-up display system according to any one of the preceding claims, wherein the picture generating module (210) further comprises a projection lens (216) disposed in a transmission path of the image beam (102) between the picture generating unit (210) and the at least one curved mirror (220), and the projection lens (216) and the at least one curved mirror (220) are configured to transmit the image beam (102) from the picture generating unit (210), so that the image beam (102) is imaged on the diffuser (230).

14. The head-up display system according to any one of the preceding claims, wherein the picture generating module (210) further comprises a planar mirror (240) disposed in a transmission path of the image beam (102) between the picture generating unit (210) and the at least one curved mirror (220).

15. The head-up display system according to any one of the preceding claims, wherein the diffuser (230) is a diffusion plate.
